# FASCICULE DE BREVET EUROPEEN

(11) **EP 0 780 051 B1**
(45) Date de publication et mention de la délivrance du brevet: **22.03.2000**
(21) Numéro de dépôt: 95120122.7
(22) Date de dépôt: 20.12.1995
(51) Int. Cl.: A01M 27/00

(54) **Piège à cartouche pour animaux nuisibles**
Patronenfalle für Schädlinge
Cartridge trap for noxious animals

(43) Date de publication de la demande: 25.06.1997
(73) Titulaire: Saint Martin, Jean Louis, 32500 Fleurance (FR)
(72) Inventeur: Saint Martin, Jean Louis, 32500 Fleurance (FR)

(56) Documents cités:
- EP-A- 0 231 704
- CH-A- 88 333
- FR-A- 1 041 327
- FR-A- 2 592 762
- FR-A- 2 721 173

## Description

La présente invention concerne les pièges à cartouche , pour éliminer les animaux nuisibles et notamment pour les taupes, lequel se positionne sur une galerie ou une taupinière .

Actuellement, on connaît des pièges pour taupe composés d'une tige métallique ayant reçue la forme d' un huit . Les deux extrémités , de ladite tige , en partie inférieure du huit resserrent deux fourches , et ces dernières sont maintenues écartées par une petite plaque qui se dérobe au moindre choc. Ce type de piège est placé dans une galerie creusée par le petit mammifère lequel en passant entre les fourches déclenche le mécanisme et meurt par étouffement ou blessure .

Un inconvénient de ce piège, étant très instable, réside en ce que son positionnement est très difficile dans la galerie ; en outre, la plaque d' écartement très sensible saute au moindre éboulement de terre rendant le piège inopérant pour la prise.

Il existe également le brevet EP-A- 0 231 704 (Bernadet) qui relate un dispositif comportant un canon coopérant avec une culasse et une gâchette ainsi qu' avec des organes de mise à feu, dont le déplacement par une taupe entraîne la mise à feu . Dans ce dernier brevet le dispositif est plus complexe en effet, la mise à feu est tributaire de deux mécanismes actionnés par des ressorts indépendants entre eux . En effet, un ressort actionne une gâchette et un autre entraîne la culasse . D' autre part , l' élément de veille est constitué par un bras horizontal pivotant sur un axe uniquement sur le plan vertical . Il y a donc déclenchement, seulement, quand l'animal exerce une poussée de bas vers le haut .

La présente invention a pour but de remédier à ces inconvénients . L'invention résout les problèmes susmentionnés au moyen d'un dispositif comme c'est caractérisé dans la revendication 1. Son placement stable s'effectue par un simple enfoncement de son extrémité inférieure dans la terre et ne peut se déclencher que par le passage de la taupe. Le piège de la présente demande offre un autre avantage très important, en ce qu'il peut être déclenché , par des mouvements horizontaux et ou verticaux de l' animal , ou par des déplacements de terre provoqués par l' animal et quel que soit le sens de passage dans la galerie .

En outre, sa conception très originale a le mérite d' être très simple et efficace. Que l' animal soit sur la trajectoire du piège ou légèrement à côté, il est tué par l' onde de choc provoquée par la déflagration de la cartouche à poudre , sans projectile, éliminant tout danger pour les utilisateurs et son entourage .

L' invention, objet des présentes, concerne un piège à cartouche comprenant un support longitudinal qui est planté verticalement, par une extrémité, dans la terre et de préférence à l' emplacement de la taupinière ; lequel support porte un élément mobile dit déclencheur au niveau de la galerie du petit mammifère ; cet élément déclencheur pivote lors du passage de la taupe , et libère par l' entremise d' une pièce d' appui , d'une tringle articulée et d'un crochet, un percuteur placé à l' extrémité supérieure du support , lequel percuteur vient frapper le culot d' une cartouche à poudre , placé au sommet d' un petit canon positionné dans un cylindre , lequel cylindre est porté par le support vertical.

Le déclencheur est constitué d' une petite paroi pivotant sur une douille , par le truchement d' un axe , ce dernier porte à une extrémité une pièce cintrée dont les extrémités sont tournées vers le haut et viennent , indifféremment au sens de rotation , soulever la pièce d' appui . La pièce cintrée est placée sur le bout de l' axe , opposé à la douille , de telle façon que sa position soit perpendiculaire audit axe et à la petite paroi orientée vers le bas .

La pièce d'appui, le crochet et le percuteur pivotent sur un même alignement, dans un espace réservé par le support vertical , et sont placés sur un même plan vertical que le canon. La pièce d'appui de forme triangulaire, le crochet et le percuteur pivotent avec des moyens appropriés et connus. Le percuteur est crocheté manuellement, par un cran formé en son extrémité arrière, sur un crochet et lors de la libération du dit percuteur, ce dernier pivote violemment en sa mi-longueur par la traction d' un ressort à boudin pour percuter le culot de la cartouche .

La sensibilité du piège peut être graduée, selon la grosseur de l'animal , par une position plus ou moins rapprochée du déclencheur avec la pièce d'appui. Pour ce type de piège, les cartouches utilisées sont à poudre , sans projectile , et de préférence du calibre douze , le canon est prévu à cet effet . Mais naturellement le calibre peut varier, et dans ce cas , il suffira de placer un canon correspondant au calibre .

Selon une variante de conception, non représentée , le piège à cartouche est partiellement enveloppé , sur la hauteur, dans un chemise rigide , laissant les deux extrémités libres . Cette chemise est fixée par des pattes rigides sur le support vertical et est en fer ou matière plastique rigide .

L'invention est exposée ci-après , plus en détail , à l' aide de dessins représentant seulement un mode d' exécution à titre d'exemple.
La figure 1 représente, en élévation , une vue du piège pour taupe en position d' attente avec la gâchette relevée .
La figure 2 représente à une autre échelle, une coupe verticale, du canon du piège , avec son verrouillage supérieure .
La figure 3 représente, à une autre échelle , selon la fig; 1 , une vue de dessous , du système de déclenchement du piège .
La figure 4 représente, en élévation , la partie inférieure du piège en position déclenchée.
La figure 5 représente, succinctement de face , l' extrémité de la douille du système de déclenchement, dont le pourtour est formé de deux biseaux.

Les figures représentent un piège à cartouche pour taupe comprenant un support vertical 1 planté dans la terre 2 , par une extrémité pointue 3, sur le passage d'une galerie effectuée par une taupe , à l'aide de l' autre extrémité munie d' une poignée 4 , lequel support 1 porte au niveau de la galerie un élément déclencheur 5, qui commande le piège proprement dit au moyen d' une tringle articulée qui libère un percuteur provoquant la mise à feu de la cartouche à l' extrémité supérieure du canon 6 .

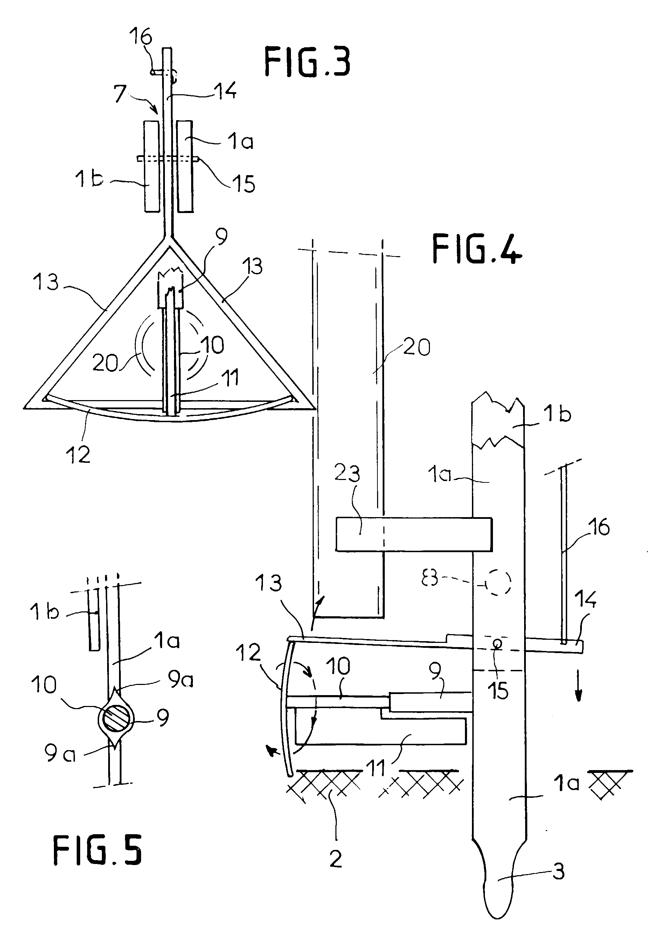

Le support vertical 1 est constitué de deux tiges plates 1a et 1 b, juxtaposées et parallèles, mais décalées sur la longueur, de manière que l' extrémité de la tige 1a dépassant l' autre, forme la pointe 3 et à l'opposé l' extrémité de la tige 1b comporte la poignée 4. Entre les tiges 1a et 1b est réservé un espace 7 pour permettre le passage et la rotation des éléments de la tringle articulée (voir fig. 3) et ledit espace 7 est maintenu avec des pièces métalliques 8 tels que rondelles par exemple , et les tiges 1a et 1b sont assemblées au moyen de vis et boulons de manière connue.

En partie inférieure et sur un champ de la tige support 1a est fixée , par une extrémité, perpendiculairement et à hauteur convenable une douille 9 longitudinale dans laquelle pivote une partie d' un axe 10 de l'élément déclencheur 5 .
La douille 9 cylindrique à l' intérieur , a la particularité de posséder un pourtour extérieur qui comporte deux biseaux 9a sur toute sa longueur ( voir fig. 5) . Ces biseaux sont placés de façon opposée et orientés dans le sens vertical, comme représentés (en fig. 5) , pour diriger le passage des plombs vers le bas, dans l' hypothèse rare mais possible ou la cartouche possède des plombs nécessité par la nature d'un animal particulièrement coriace .

La partie de l' axe 10 , qui se prolonge à l' extérieur de la douille , porte une petite paroi 11 fixée par un de ses champs avec soudure ; laquelle petite paroi 11 étant solidarisée dans le même sens avec la douille 9 , forme un décrochement 11a pour contourner ladite douille 9 afin de se prolonger jusqu' au support vertical 1 , sans le toucher. Cette petite paroi est orientée vers le bas , par le pivotement de l' axe 10, et est positionnée transversalement dans une des galeries de la taupe, de manière à former un obstacle pivotant lors de son passage.

Sur l' extrémité extérieure de l'axe 10 est solidarisé , perpendiculairement à ce dernier et à la petite paroi, une pièce 12 longitudinale et légèrement cintrée vers le haut, dont la longueur est sensiblement égale à l'axe 10.

Une fois le piège positionné sur site , la petite paroi 11 se trouve au niveau de la galerie et est orientée vers le bas , laquelle est poussée vers le haut, lors du passage de la taupe (voir fig. 4) , faisant pivoter l'axe 10 et du même fait tourne la pièce cintrée 12 qui bute sur une pièce d'appui 13 située au dessus . Cette pièce d'appui pivote sur sa queue 14 , vers le haut , tirant la tringle 16 vers le bas , laquelle tringle libère par le truchement d' un crochet 17 le percuteur 18 . La petite paroi 11 est amovible et interchangeable grâce au retrait de l' axe 10 , permettant d'adapter la forme de son contour et ses dimensions à la profondeur et à la forme des galeries des mammifères.

A l'aplomb et au dessus de l'élément déclencheur 5 est placé un canon 6 vertical qui renferme, en partie supérieure , une cartouche pour tuer la taupe lorsqu' elle bousculera la petite paroi 11, comme détaillé plus loin . La pièce d' appui 13 est placée perpendiculairement par rapport à l' axe du support 1 , et est constituée uniquement par une bande qui forme le pourtour de ladite pièce. La surface intérieure de la pièce d' appui est dégagée , formant une grande ouverture , pour permettre le passage de l'onde de choc et éventuellement des plombs si besoin est, provenant du canon situé à l' aplomb.

La pièce d' appui 13 a une forme triangulaire, dont un sommet se prolonge par une queue 14 rigide et droite qui passe dans l' espace 7 du support vertical et pivote sur ce dernier avec un axe 15, et se prolonge au delà du dit support.
L' extrémité de cette queue 14 est reliée , par l'entremise d' une tringle 16 , à un crochet 17 situé sur la partie haute du support vertical . Le crochet 17 pivote par sa base dans l' espace 7 sur ledit support vertical et ce crochet 17 est orienté dans le sens du support vertical , et retient un percuteur 18 par un cran 19 formé sur son extrémité arrière.

Le percuteur 18 de forme longitudinale pivote , comme la pièce d'appui 13 et le crochet 17 , dans l'espace 7 sur le support vertical . Le percuteur 18 est muni en son extrémité avant d' une pointe de percussion 21 qui vient frapper, sous l' action d'un ressort 22 , lors du déclenchement , le culot de la cartouche placé dans le haut du canon . Le ressort 22 est maintenu par un bout sur le support vertical .

La queue 14 , le crochet 17 , le percuteur 18 et le canon 6 sont alignés sur un même plan vertical , lequel canon 6 est logé dans un tube cylindrique 20 et vertical maintenu parallèlement au support vertical au moyen de pattes 23 de fixation.

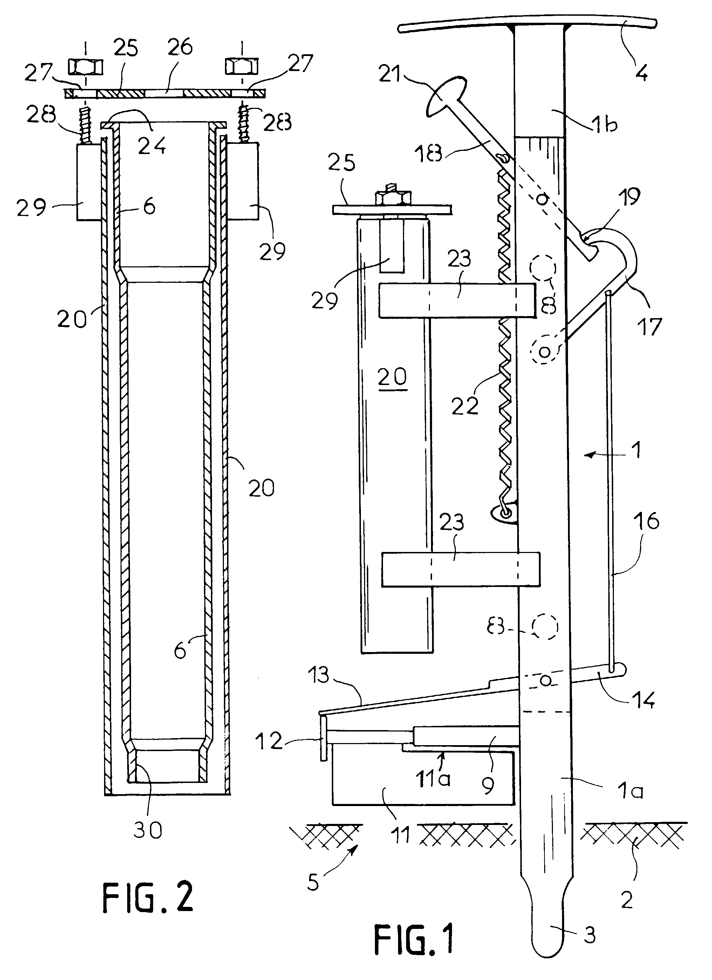

Le canon 6 et le tube 20 ont sensiblement la même longueur , lequel canon se maintient dans le tube par une collerette 24 en partie haute qui repose sur l'extrémité du dit tube (voir fig. 2) . Après avoir introduit une cartouche (non représentée) dans la chambre à cartouche du canon, l'ensemble : tube - canon - cartouche, est bloqué au moyen d'un couvercle 25 , qui comprend un trou central 26 pour la percussion et deux trous latéraux 27 diamétralement opposés pour le passage de deux vis 28. Les deux vis 28 sont diamétralement opposées et vissés dans des épaulements 29 solidarisés sur la paroi extérieure du tube cylindrique 20.

Le canon 6 est un tube réducteur choqué en partie inférieure 30 , semblable au fusil de chasse, pour augmenter l' onde de choc, afin d' atteindre la taupe par l'onde de choc , même si cette dernière n'est pas dans l' axe du canon .
L' invention est plus particulièrement destinée pour supprimer les taupes , mais peut naturellement être utilisée pour d'autre petits mammifères .

## Revendications

1. Piège à cartouche pour éliminer les animaux nuisibles , notamment pour les taupes , se positionnant sur une galerie ou une taupinière , caractérisé en ce qu' il comprend un support vertical (1) qui se plante dans la terre par son extrémité inférieure pointue , lequel support est constitué de deux tiges (1a) et (1b) plates et parallèles qui réservent un espace (7) entre elles, lequel espace est maintenu au moyen de pièces appropriées pour permettre le passage et la rotation des pièces pivotantes ; et sur un champ de la tige support (1a) est fixée horizontalement une douille (9) dans laquelle pivote un déclencheur (5) comprenant un axe (10) qui porte sur son prolongement extérieur une petite paroi (11) et sur son extrémité une pièce cintrée (12) , cette dernière pièce (12) pousse lors de son pivotement une pièce d' appui (13) maintenue par une queue (14) qui oscille à mi-longueur dans l' espace (7) et par son extrémité , ladite queue (14) est reliée avec une tringle (16) à un crochet (17) qui retient le percuteur longitudinal (18) , lequel percuteur pivotant en sa mi-longueur frappe le culot d'une cartouche placée dans la partie supérieure d'un canon (6), ce dernier est tenu parallèlement au support vertical et à l' aplomb de la pièce d'appui au moyen de pattes de fixation (23) et d'un tube (20) cylindrique.

2. Piège à cartouche pour taupe selon la revendication 1 caractérisé en ce que la queue (14) de la pièce d'appui, le crochet (17) , le percuteur (18) et le canon (6) sont placés sur un même plan vertical.

3. Piège à cartouche pour taupe selon les revendications 1 et 2 , caractérisé en ce que la queue de la pièce d'appui , le crochet et le percuteur pivotent dans l'espace (7) sur le support vertical (1) et sur un même alignement.

4. Piège à cartouche pour taupe selon la revendication (1) , caractérisé en ce que la pièce cintrée (12) , dont les extrémités sont tournées vers le haut, est placée sur le bout de l' axe (10) de telle façon que sa position soit perpendiculaire au dit axe et à la petite paroi (11) qui est orientée vers le bas .

5. Piège à cartouche pour taupe selon les revendications 1 ou 2 , caractérisé en ce que la petite paroi (11) ,placée transversalement dans la galerie , est fixée par un de ses champs sur l'axe (10) et dans le même sens que la douille (9) , formant un décroché pour contourner cette douille .

6. Piège à cartouche pour taupe selon l'une quelconque des revendications 1 à 3, caractérisé en ce que la pièce d'appui (13) , ayant une forme de préférence triangulaire , est constituée uniquement par une bande formant un pourtour et sa surface intérieure est dégagée formant une grande ouverture pour permettre le passage de la déflagration.

7. Piège à cartouche pour taupe selon la revendication 1, caractérisé en ce que la douille (9) est fixée perpendiculairement par une extrémité sur la partie inférieure de la tige support (1a) à hauteur convenable pour correspondre au niveau de la galerie.

8. Piège à cartouche pour taupe selon la revendication 1 , caractérisé en ce que les tiges plates (1a) et (1b) du support vertical sont décalées entre elles sur la longueur, de manière que l'extrémité inférieure de l'une forme la pointe de positionnement dans le sol et l'extrémité supérieure de l'autre porte la poignée (4).

9. Piège à cartouche pour taupe selon la revendication 1, caractérisé en ce que le canon (6) se maintient dans le tube (20) cylindrique, par sa collerette (24) qui repose sur l'extrémité supérieure dudit tube.

10. Piège à cartouche pour taupe selon les revendications 1 et 8, caractérisé en ce que le tube cylindrique, le canon et la cartouche sont bloqués au moyen d'un couvercle (25) comprenant un trou central (26) pour la percussion et deux trous latéraux (27) pour le passage de deux vis.

11. Piège à cartouche pour taupe selon la revendication 1, caractérisé en ce que le percuteur est retenu par un cran (19) se trouvant dans son extrémité arrière, au moyen d'un crochet (17) et son autre extrémité porte une pointe (21) de percussion

## Patentansprüche

1. Patronenfalle zur Beseitigung von schädlichen Tieren, insbesondere Maulwürfen, welche über einen Gang oder einen Maulwurfshügel aufgesetzt wird. Die Falle zeichnet sich aus durch einen senkrechten Träger (1), der mit seinem unteren spitzen Ende in die Erde eingerammt wird. Dieser Träger besteht aus zwei flachen, parallel angeordneten Stangen (1a) und (1b), die untereinander einen Raum (7) bilden. Dieser Raum wird mit Hilfe von Teilen aufrechterhalten, welche geeignet sind, das Einschieben und die Rotation der drehbaren Teilen zu ermöglichen. Auf einer Kante der Trägerstangen (1a) befindet sich eine waagerecht befestigte Buchse (9), in welcher sich ein Auslöser (5) dreht. Dieser besteht aus einer Achse (10), die auf ihrer Außenverlängerung eine kleine Wand (11) und auf ihrer Spitze ein gebogenes Bauteil (12) trägt. Beim Drehen drückt dieses Bauteil (12) ein Stützelement (13), das durch einen Schaft (14) festgehalten wird, welcher auf halber Länge in den Raum (7) pendelt. Dieser Schaft (14) ist durch eine Stange (16) mit einem Haken (17), welcher den waagerecht angeordneten Schlagbolzen (18) festhält, verbunden. Beim Drehen auf seiner halben Länge trifft der Schlagbolzen den Boden einer Patrone, die im Oberteil einer Kanone (6) eingesetzt ist. Diese Kanone ist parallel zum senkrechten Träger und im Lot zum Stützteil mit Hilfe von Befestigungslaschen (23) und von einem runden Rohr (20) festgehalten.

2. Patronenfalle für Maulwürfe gemäß Vindikation 1 dadurch kennzeichnet, dass sich der Schaft (14) des Stützteils, der Haken (14), der Schlagbolzen (18) und die Kanone (6) in derselben senkrechten Ebene befinden.

3. Patronenfalle für Maulwürfe gemäß Vindikationen 1 und 2 dadurch kennzeichnet, dass der Schaft des Stützteils, der Haken und der Schlagbolzen im Raum (7) auf dem senkrechten Träger (1) und auf derselben Linie drehen.

4. Patronenfalle für Maulwürfe gemäß Vindikation 1 dadurch kennzeichnet, dass das gebogene Teil (12), dessen Spitzen nach oben gerichtet sind, so an der Spitze der Achse (10) angebracht ist, dass seine Position rechtwinklig zur besagten Achse und zur kleinen nach unten gerichteten Wand (11) ist.

5. Patronenfalle für Maulwürfe gemäß Vindikationen 1 oder 2 dadurch kennzeichnet, dass die kleine, quer in den Gang eingesetzte Wand (11) über eine ihrer Kanten auf der Achse (10) und in derselben Richtung wie die Buchse (9) befestigt ist und einen Knick bildet, um die Buchse zu umgehen.

6. Patronenfalle für Maulwürfe gemäß irgendeiner der Vindikationen 1 bis 3 dadurch gekennzeichnet, dass das Stützteil (13) mit einer vorzugsweise dreieckigen Form, ausschließlich aus einem Band besteht, das einen Umkreis bildet und dessen hintere Fläche freigesetzt ist und eine große Öffnung bildet, um den Durchgang der Deflagration zu ermöglichen.

7. Patronenfalle für Maulwürfe gemäß Vindikation 1, dadurch gekennzeichnet, dass die Buchse (9) über eine Spitze rechtwinklig auf dem Unterteil der Stützstange (1a) in geeigneter Höhe befestigt ist, um dem Niveau des Ganges zu entsprechen.

8. Patronenfalle für Maulwürfe gemäß Vindikation 1 dadurch gekennzeichnet, dass die flachen Stangen (1a) und (1b) des senkrechten Trägers gegenüber einander so versetzt sind, dass die untere Spitze der einen die Spitze zur Positionierung im Boden bildet und dass die obere Spitze der anderen als Träger für den Griff fungiert (4).

9. Patronenfalle für Maulwürfe gemäß Vindikation 1 dadurch gekennzeichnet, dass die Kanone (6) im zylindrischen Rohr (20) über ihrem Flansch (24), welcher auf dem oberen Ende des Rohres ruht, gehalten wird.

10. Patronenfalle für Maulwürfe gemäß Vindikationen 1 und 8 dadurch gekennzeichnet, dass das zylindrische Rohr, die Kanone und die Patrone mit Hilfe eines Deckels (25) blockiert sind. Dieser Deckel hat eine Zentralbohrung (26) für den Schlag und zwei Seitenbohrungen (27) zur Durchführung von zwei Schrauben.

11. Patronenfalle für Maulwürfe gemäß Vindikationen 1 dadurch gekennzeichnet, dass der Schlagbolzen durch eine an seinem hinteren Ende befindliche Rastung (19) mit Hilfe eines Hakens (17) festgehalten wird und dass sein anderes Ende mit einer Schlagspitze (21) versehen ist.

## Claims

1. Cartridge trap for getting rid of pests, notably moles, which is placed in a tunnel or mole run, characterised in that it consists of a vertical support (1 ) which is inserted into the ground by its lower, pointed end, the said support being composed of two flat, parallel bars (1a) and (1 b) which maintain a space (7) between them, the said space being maintained by means of suitable parts for allowing the pivoting parts to rotate and pass through; and on one edge of the support bar (1a) is fixed horizontally a bush (9) in which pivots a trigger device (5) consisting of a shaft (10) whose exterior extension carries a small wall (11) and which has on its end a curved part (12), this latter part (12), when pivoted, pushes on a support piece (13) maintained by a stem (14) which oscillates at mid-length in space (7) and at its end, the said stem (14) being connected by means of a rod (16) to a hook (17) which holds the longitudinal striker (18), the said striker, pivoting at its mid-length, hits the cap of a cartridge placed in the upper section of a gun (6), this latter being held parallel to the vertical support and plumb with the support part by means of fixing lugs (23) and a cylindrical tube (20).

2. Cartridge trap for moles as claimed in claim 1 characterised in that the stem (14) of the support part, the hook (17), the striker (18) and the gun (6) are placed in the same vertical plane.

3. Cartridge trap for moles as claimed in claims 1 and 2 characterised in that the stem of the support part, the hook and the striker pivot in space (7) on vertical support (1 ) and with the same alignment.

4. Cartridge trap for moles as claimed in claim 1 characterised in that the curved part (12), whose ends are turned upwards, is placed at the end of shaft (10) in such a way that its position is perpendicular to the said shaft and to the small wall (11) which is oriented downwards.

5. Cartridge trap for moles as claimed in claims 1 or 2 characterised in that the small wall (11) placed transversely in the tunnel, is fixed by one of its edges to shaft (10) and in the same direction as bush (9), forming a release mechanism rotating within this bush.

6. Cartridge trap for moles as claimed in any one of claims 1 to 3 characterised in that the support piece (13), which preferably has a triangular shape, is made from just a strip forming a periphery and its interior area is open making a large aperture in order to allow the explosion to pass through.

7. Cartridge trap for moles as claimed in claim 1 characterised in that the bush (9) is fixed perpendicularly by one end on the lower section of the support bar (1a) at a convenient height to correspond with the tunnel level.

8. Cartridge trap for moles as claimed in claim 1 characterised in that the flat bars (1 a) and (1 b) of the vertical support are displaced from each other along the length in such a way that the lower end of one forms the point for placing in the ground and the upper end of the other carries the handle (4).

9. Cartridge trap for moles as claimed in claim 1 characterised in that the gun (6) is held in the cylindrical tube (20) by its flange (24) which rests on the upper end of the said tube.

10. Cartridge trap for moles as claimed in claims 1 and 8 characterised in that the cylindrical tube, gun and cartridge are blocked by means of a cover (25) containing a central hole (26) for percussion and two lateral holes (27) to accept two screws.

11. Cartridge trap for moles as claimed in claim 1 characterised in that the striker is held by a catch (19) at its rear end by means of a hook (17) and its other end carries the percussion spike (21).
